# EUROPÄISCHE PATENTANMELDUNG

(11) **EP 1 249 928 A1**
(43) Veröffentlichungstag der Anmeldung: **16.10.2002**
(21) Anmeldenummer: 01108951.3
(22) Anmeldetag: 10.04.2001
(51) Int. Cl.: H02M 7/48

(54) **Verfahren und Spannungswandler zum Umwandeln einer Eingangsgleichspannung in eine Wechselspannung im Netzfrequenzbereich**

(71) Anmelder: SIEMENS AKTIENGESELLSCHAFT, 80333 München (DE)
(72) Erfinder: Berger, Erik, 1030 Wien (AT); Eisner, Martin, 2484 Weigelsdorf (AT); Meschik, Martin, 1110 Wien (AT); Rahmanian-Shahri, Navid, Dr., 1170 Wien (AT)

(57) **Zusammenfassung**

Zum Erzeugen einer Wechselspannung (U_{A}) im Netzfrequenzbereich aus einer Eingangsgleichspannung (U_{E}), werden an die Primärwicklung (W1) eines Übertragers (UET) zwei gegenpolige, pulsweitenmodulierte Rechteckpulse (a, b) hoher Schaltfrequenz gelegt, wobei jeder Puls entsprechend einer Halbwelle der zu erzeugenden Wechselspannung moduliert ist. An der Sekundärseite werden die Impulse beider Pulse gleichgerichtet, so dass nur noch ein Puls (d) aus Impulsen einer Polarität vorliegt, welche aufgrund ihrer Pulsweitenmodulation aufeinander folgenden Halbwellen der zu erzeugenden Wechselspannung entsprechen, und der erhaltene Puls wird periodisch mit der doppelten Frequenz der zu erzeugenden Wechselspannung umgepolt, so dass ein Puls (e) erhalten wird, der bezüglich Amplitude, Frequenz und Polarität der Ausgangswechselspannung pulsweitenmoduliert ist.

## Beschreibung

Die Erfindung bezieht sich auf ein Verfahren zum Erzeugen einer Wechselspannung im Netzfrequenzbereich aus einer Eingangsgleichspannung, bei welchem die Eingangsgleichspannung mit gegenüber der Netzfrequenz hoher Schaltfrequenz pulsweitenmoduliert an die Primärwicklung eines Übertragers geschaltet wird.

Ebenso bezieht sich die Erfindung auf einen Spannungswandler zum Umwandeln einer Eingangsgleichspannung in eine Ausgangswechselspannung im Netzfrequenzbereich, mit einem Übertrager, an dessen Primärwicklung die Eingangsgleichspannung über eine von einer Ansteuerschaltung angesteuerte Schalteinrichtung mit gegenüber der Netzfrequenz hoher Schaltfrequenz pulsweiten-moduliert geschaltet wird.

Zur Erzeugung einer Wechselspannung im Netzfrequenzbereich, z. B. 117 V/60 Hz oder 230 V/50 Hz, aus einer Eingangsgleichspannung von z. B. 12 oder 24 V wird nach dem Stand der Technik üblicherweise zweistufig vorgegangen, beispielsweise wie folgt:

In einer ersten Stufe wird mittels eines Hochsetzstellers aus der niedrigen Eingangsgleichspannung von 12 V eine Zwischenkreisspannung von 310 V erzeugt. Dazu verwendet man einen Sperr- oder Flusswandler mit Pulsweitenmodulation in einem Frequenzbereich oberhalb des Hörbereichs, z. B. 20 kHz, wobei eine Regelung auf konstante Zwischenkreisspannung erfolgt. Diese hohe Gleichspannung wird sodann mittels einer Vollbrücke umgerichtet, um die gewünschte Wechselspannung zu erhalten, wobei wieder eine Pulsweitenmodulation bei einer Schaltfrequenz von 20 kHz oder mehr verwendet wird. Die stufenförmige, dabei erhaltene Spannung bildet mit ihrer Einhüllenden die netzfrequente Ausgangsspannung. Es ist für den Fachmann einsichtig, dass dieses zweistufige Verfahren zwangsläufig zu höheren Verlusten und einem niedrigeren Wirkungsgrad führt. Man benötigt in beiden Wandlerstufen Induktivitäten, wobei in zumindest einer Stufe ein Transformator erforderlich ist, um die meist geforderte galvanische Trennung zwischen Ein- und Ausgang sicherzustellen. Diese Induktivitäten und der erforderliche Zwischenkreiskondensator wirken sich nachteilig auf die Kosten aus.

Wandelt man die Eingangsgleichspannung von z. B. 12 V gleich in eine 50Hz-Spannung, so erfordert dies einen teuren 50Hz-Transformator, um die gewünschten 117/230 V ausgangsseitig zu erreichen.

Eine Aufgabe der Erfindung liegt in der Schaffung eines Verfahrens bzw. eines Spannungswandlers, bei welchen der Gesamtaufwand geringer ist und bei dem auch keine auf Netzfrequenz dimensionierte Transformatoren benötigt werden.

Diese Aufgabe wird mit einem Verfahren der eingangs genannten Art gelöst, bei welchem erfindungsgemäß an die Primärwicklung zwei gegenpolige, pulsweitenmodulierte Rechteckpulse gelegt werden, wobei jeder Puls entsprechend einer Halbwelle der zu erzeugenden Wechselspannung moduliert ist, und die Impulse bei der Pulse jeweils so gegeneinander verschoben, dass die Impulse eines Pulses in die Lücken des anderen Pulses fallen, an der Sekundärseite des Übertragers die Impulse beider Pulse gleichgerichtet werden, so dass nur noch ein Puls aus Impulsen einer Polarität vorliegt, welche aufgrund ihrer Pulsweitenmodulation aufeinander folgenden Halbwellen der zu erzeugenden Wechselspannung entsprechen, und der nach Gleichrichtung erhaltene Puls periodisch mit der doppelten Frequenz der zu erzeugenden Wechselspannung umgepolt wird, so dass ein Puls erhalten wird, der bezüglich Amplitude, Frequenz und Polarität der Ausgangswechselspannung pulsweitenmoduliert ist.

Da das Umschalten sekundärseitig im Netzfrequenzbereich erfolgt, können die erforderlichen Schaltelemente auf diese niedrigen Frequenzen dimensioniert werden.

In manchen Fällen kann es erforderlich oder zweckmäßig sein, wenn der erhaltene Puls einer Tiefpassfilterung unterzogen wird, um die Ausgangswechselspannung zu erhalten.

Bei einer vorteilhaften Variante der Erfindung ist vorgesehen, dass bei in zwei Hälften geteilter Primärwicklung des Übertragers die Eingangsgleichspannung entsprechend den gegenpoligen, pulsweitenmodulierten Rechteckpulsen jeweils an die eine bzw. gegenpolig an die andere Wicklungshälfte geschaltet wird. Dadurch findet man in der Praxis primärseitig mit zwei gesteuerten Schaltern das Auslangen.

Die gestellte Aufgabe wird auch mit einem Spannungswandler der eingangs genannten Art gelöst, bei welchem gemäß der Erfindung die Schalteinrichtung und die Ansteuerschaltung (dazu eingerichtet sind, aus der Eingangsgleichspannung an die Primärwicklung zwei gegenpolige, pulsweitenmodulierte Rechteckpulse zu legen, wobei jeder Puls entsprechend einer Halbwelle der zu erzeugenden Wechselspannung moduliert ist, und die beiden Pulse gegeneinander verschoben sind, so dass die Impulse eines Pulses in die Lücken des anderen Pulses fallen, der Sekundärwicklung des Übertragers (UET) ein Gleichrichter nachgeschaltet ist, an dessen Ausgang nur noch ein Puls aus Impulsen einer Polarität vorliegt, welche aufgrund ihrer Pulsweitenmodulation aufeinander folgenden Halbwellen der zu erzeugenden Wechselspannung entsprechen, und dem Gleichrichter ein gesteuerter Umpolschalter nachgeordnet ist, um den nach dem Gleichrichter vorliegenden Puls mit der doppelten Frequenz der zu erzeugenden Wechselspannung umzupolen, so dass ein Puls erhalten wird, der bezüglich Amplitude, Frequenz und Polarität der Ausgangswechselspannung pulsbreitenmoduliert ist.

Die damit erzielbaren Vorteile wurden bereits in Zusammenhang mit dem Verfahren angegeben.

Auch hier ist es zweckdienliche, wenn durch ein internes und/oder verbraucherseitiges Tiefpassfilter aus diesem Puls die Ausgangswechselspannung erhalten wird.

Ebenso kann es vorteilhaft sein, falls die Primärwicklung (W1) des Übertragers in zwei Hälften geteilt ist und die Schalteinrichtung zwei gesteuerte Schalter aufweist, mit deren Hilfe die Eingangsgleichspannung abwechselnd an die eine bzw. gegenpolig an die andere Wicklungshälfte legbar ist. Insbesondere bei ohmscher Last ist es ratsam, wenn das Tiefpassfilter aus einer Induktivität in einem Längszweig nach dem Umpolschalter und der Last gebildet ist.

In der Praxis, z.B. bei von Motoren gebildeten Lasten, berücksichtigt die Erfindung, dass das Tiefpassfilter zumindest zum Teil in einer induktiven Last enthalten ist.

Eine zweckmäßige Variante sieht vor, dass der Umpolschalter aus einer Brückenschaltung besteht, welche in ihren vier Zweigen je einen gesteuerten Schalter aufweist.

Besonders vorteilhaft ist es, wenn Gleichrichter und Umpolschalter in einem Gleichrichtschalter mit Brückenstruktur zusammengefasst sind, wobei jeder Brückenzweig zwei gegenpolig, in Serie geschaltete Dioden aufweist und jede Diode von einem Schalttransistor überbrückt ist, sodass durch abwechselnde Ansteuerung je eines Schalttransistors je Brückenzweig mit doppelter Netzfrequenz abwechselnd die einen bzw. die anderen Dioden der Brücke deren wirksamen Zweig bilden, wodurch der bezüglich Amplitude, Frequenz und Polarität der Ausgangswechselspannung pulsbreiten-modulierte Puls erhalten wird. Auf diese Weise kann das sekundärseitige Gleichrichten und Umschalten in einer einzigen Brücke erfolgen.

Zu Lösung des Problems der Potentialtrennung günstig ist es dabei, wenn jeder Schalttransistor über eine Leuchtdiode potentialgetrennt ansteuerbar ist.

Kostengünstige Lösungen bei höheren Stückzahlen der Spannungswandler lassen sich erreichen, falls der Gleichrichterschalter als integrierte Schaltung ausgebildet ist.

Im Sinne einer Vereinfachung und geringen Kosten ist es auch ratsam, dass der Gleichrichterschalter als integrierte Schaltung ausgebildet ist.

Die Erfindung samt weiterer Vorteile ist im Folgenden anhand beispielsweiser Ausführungsformen näher erläutert, die in der Zeichnung veranschaulicht sind. In dieser zeigen
- • Fig. 1: eine vereinfachtes Prinzipschaltbild eines Spannungswandlers nach der Erfindung,
- • Fig. 2: Signalverläufe, welche im Zuge des Verfahrens nach der Erfindung auftreten, vereinfacht und nicht maßstäblich,
- • Fig. 3: eine weitere Schaltung eines erfindungsgemäßen Spannungswandlers.
- • Fig. 4: einen bei der Schaltung nach Fig. 3 verwendeten Gleichrichterschalters im Details und
- • Fig. 5 a und b: zwei Schaltzustände des Gleichrichterschalters nach Fig. 4.

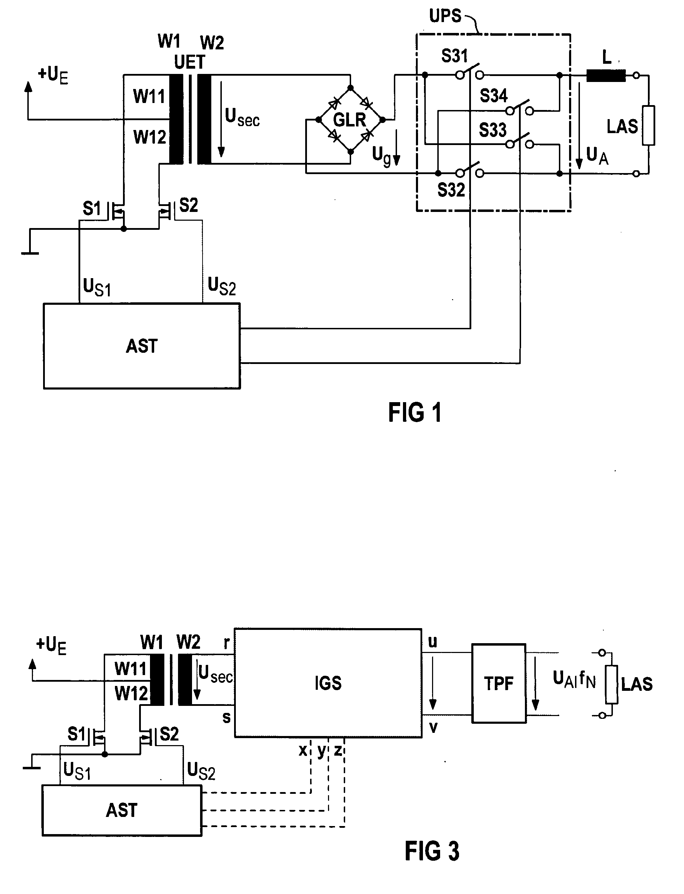

Fig. 1 zeigt einen Übertrager UET mit einer aus zwei Wicklungshälften W11, W12 bestehenden Primärwicklung W1 und einer Sekundärwicklung W2. Eine Eingangsgleichspannung U_{E}, z. B. 12 V, liegt mit ihrem Pluspol an der Mitte der Primärwicklung W1 und ist mit ihrem Minuspol über einen ersten getrennten Schalter S1 zu dem Anfang der ersten Wicklungshälfte W11 und über einen zweiten gesteuerten Schalter S2 zu dem Ende der zweiten Wicklungshälfte W12 geführt. Die beiden gesteuerten Schalter S1, S2 hier Feldeffekttransistoren, können in weiter unten noch näher beschriebener Weise von einer Ansteuerschaltung AST angesteuert werden.

Sekundärseitig ist der Wicklung W2 mit der Sekundärspannung U_{sec} ein Brückengleichrichter GLR nachgeschaltet und auf diesen folgt ein Umpolschalter UPS, bestehend aus vier gesteuerten Schaltern S31 ... S34. Von diesen, gleichfalls vor der Ansteuerschaltung AST gesteuerten Schaltern sind S31 und S32 einerseits und S33 und S34 andererseits abwechselnd geschlossen oder geöffnet. Zwischen dem Ausgang des Umpolschalters UPS und einer an den Wandler angeschlossenen last liegt eine Längsdrossel L.

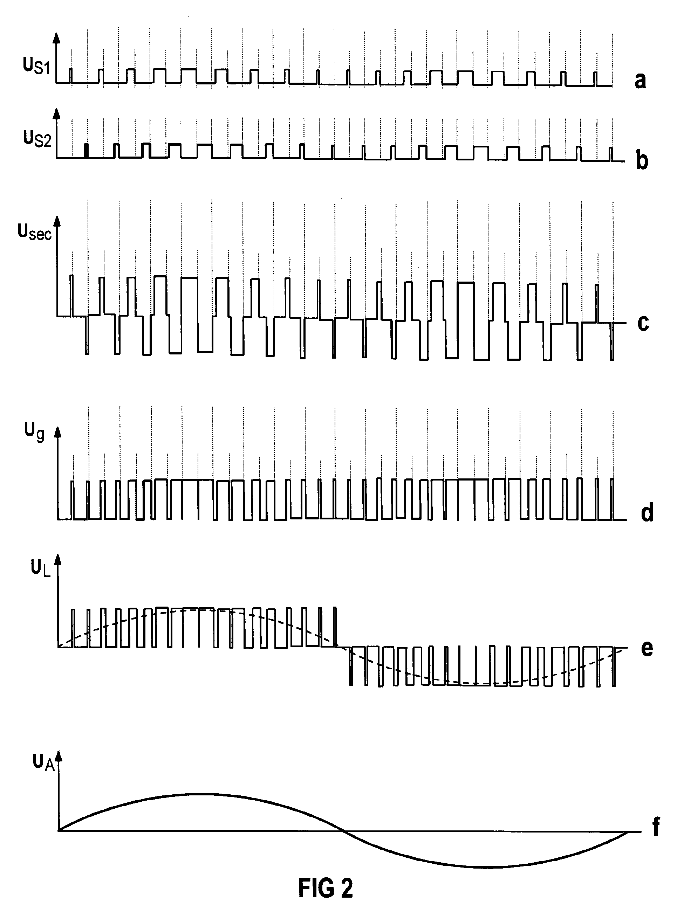

Nun wird unter Bezugnahme auch auf Fig. 2 das Verfahren nach der Erfindung näher beschrieben.

An die Primärwicklung W1 werden zwei gegenpolige, pulsweitenmodulierte Rechteckpulse gelegt, wobei jeder Puls entsprechend einer Halbwelle der zu erzeugenden Wechselspannung moduliert ist. Dabei sind die Impulse beider Pulse jeweils so gegeneinander verschoben, dass die Impulse eines Pulses in die Lücken des anderen Pulses fallen.

In Fig. 2 ist unter "f" die zu erzeugende Ausgangswechselspannung U_{A} dargestellt, deren Frequenz z. B. 50 Hz betragen soll. Unter "a" und "b" sind in Fig. 2 die Ansteuerimpulse für die beiden gesteuerten Schalter S1, S2 dargestellt, unten in "C" die sich ergebende Sekundärspannung U_{sec} des Übertragers, die in ihrem Verlauf auch der Primärspannung des Übertragers entspricht. Die Gegenpoligkeit der Pulse wird hier durch das abwechselnde Schalten der Eingangsgleichspannung U_{E} an eine der beiden Wicklungshälften W11, W12 erreicht. Bei einer einteiligen Primärwicklung W1 müssten vier gesteuerte Schalter verwendet werden um diese Gegenpoligkeit zu erreichen.

Das Schalten erfolgt mit einer gegenüber der Netzfrequenz relativ hohen Frequenz, z.B. mit 100 kHz, wodurch der Übertrager nur geringe Abmessungen und Masse aufweisen muss und die sekundärseitige Filterung minimalen Aufwands bedarf. Es ist daher klar, dass die Darstellung nach Fig. 2 nur schematisch zu verstehen ist, da hier die Schaltfrequenz wesentlich geringer gewählt ist, um eine anschauliche Darstellung zu ermöglichen.

Der zusammengesetzte Puls c nach Fig. 2 wird sodann mit Hilfe des Gleichrichters GLR gleichgerichtet, so dass sich als Ausgangsspannung Ug des Gleichrichters der Puls d nach Fig. 2 ergibt, der nur noch Impulse einer Polarität aufweist. Da dieser Puls nun aufeinanderfolgenden Sinushalbwellen der zu erzeugenden Ausgangsspannung entspricht ist ein Umpolen im Takt der doppelten Ausgangsfrequenz somit mit 100 Hz, erforderlich, was mit Hilfe des Umpolschalters UPS erfolgt, sodass am Ausgang des Schalters UPS eine Spannung U₂ gemäß "e" in Fig. 2 liegt. Diese Spannung gesteht aus einem Puls, der bezüglich Amplitude, Frequenz und Polarität der Ausgangswechselspannung pulsweitenmoduliert ist. Aus dieser Spannung erhält man nach Tiefpassfilterung die gewünschte Ausgangsspannung.

Falls die Last LAS rein ohm'sch ist, erfolgt die Tiefenpassfilterung oder Integration mit Hilfe der Längsinduktivität L. In Hinblick auch auf die hohe Taktfrequenz von 100 kHz können in der Praxis besondere Filterungsmittel entfallen, da z.B. bei motorischen Lasten ein induktiver Anteil in der Last enthalten ist, oder andererseits z. B. Glühbirnen so träge sind, dass eine besondere Filterung entfallen kann.

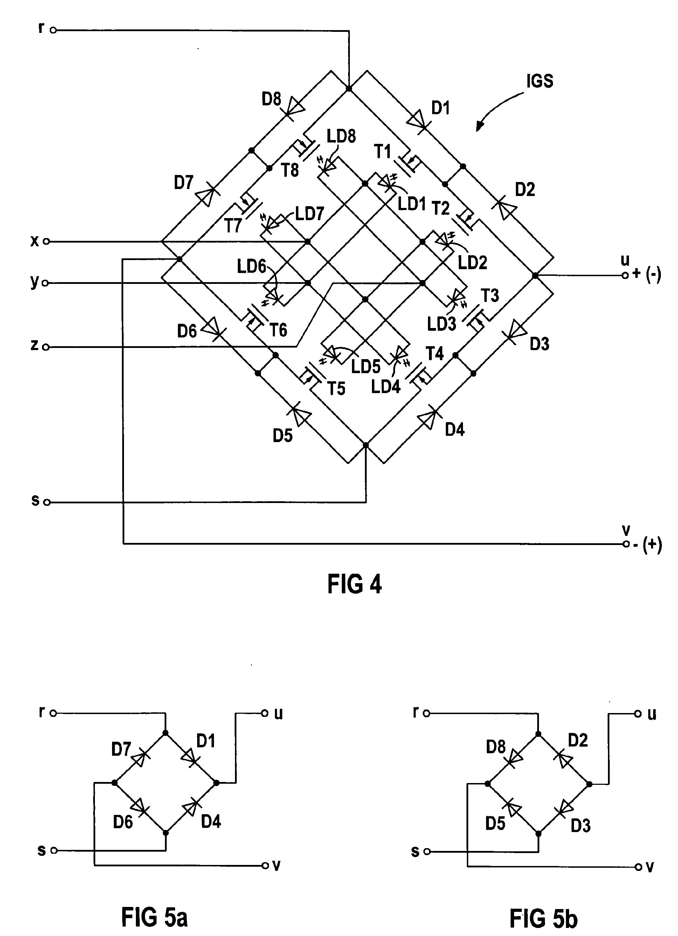

Unter Bezugnahme auf die Fig. 3 bis 5 wird nun eine andere Variante eines Spannungswandlers beschrieben, bei welchem der Gleichrichter und der Umpolschalter an der Sekundärseite zu einer Einheit zusammengezogen sind, die auch als integrierte Schaltung realisierbar ist.

Primärseitig gleicht die Schaltung jener nach Fig. 1. Sekundärseitig folgt auf die Sekundärwicklung W2 des Übertragers ein integrierter Gleichrichterschalter IGS und auf diesem ein Tiefpassfilter TPF, an dessen Ausgang die Last LAS anschließbar ist.

Der Gleichrichterschalter IGS, dessen Aufbau in Fig. 4 näher gezeigt ist, wird an drei Eingängen x, y, z von der Ansteuerschaltung AST angesteuert, seine Eingänge sind mit r und s und seine Ausgänge mit u und v bezeichnet.

Wie nun aus Fig. 4 hervorgeht, weist der Gleichrichterschalter IGS einen Brückenaufbau auf. In jedem Brückenzweig befinden sich zwei gegenpolige in Serie geschaltete Dioden D1, D2; D3, D4; D5, D6 und D7, D8. Jede Diode ist von einem Schalttransistor T1 ... T8 überbrückt. Hier ist anzumerken, dass es sich bei den Dioden um die z.B. MOSFET-Transistoren inhärenten parasitären Dioden handeln kann, wobei allerdings die Durchlassspannung der Dioden durch geeignete Dotierung sehr gering gehalten werden sollte.

Die Ansteuerung der Transistoren T1 ... T8 erfolgt optisch potential getrennt mit Hilfe von Leuchtdioden LD1 ... LD8, wobei nicht notwendigerweise für jeden Schalttransistor eine Leuchtdiode vorhanden sein muss.

Um aus dem gleichgerichteten pulsweitenmoduliertem Signal, "d" in Fig. 2, ein der gewünschten sinusförmigen Ausgangsspannung entsprechendes Signal zu erhalten, muss der Gleichrichterschalter IPS entsprechend umgeschaltet werden.

Der Anschluss "x" ist die gemeinsame Anode der Leuchtdioden auf der Ansteuerschaltungsseite, der über einen nicht gezeigten Vorwiderstand auf die positive Versorgungsspannung der Ansteuerschaltung AST geschaltet wird.

Wenn der Anschluss "z" von der Ansteuerschaltung auf Masse gezogen wird, so sind die Leuchtdioden LD2, LD3, LD5 und LD8 aktiv und die entsprechenden Transistoren T2, T3, T5 und T8 eingeschaltet. Diese eingeschalteten Transistoren überbrücken die entsprechenden Dioden D2, D4, D5 und D8 und es ergibt sich eine Ersatzschaltung wie in Fig. 5a. Es wirken nur die Dioden D1, D4, D6 und D7 als gleichgerichtete Elemente und es ergibt sich ein Spannungsverlauf der positiven Halbwelle entsprechend.

Wenn der Anschluss "y" von einer Ansteuerschaltung auf Masse gezogen wird, so sind die Leuchtdioden LD1, LD4, LD6 und LD7 aktiv und die entsprechenden Transistoren T1, T4, T6 und T7 eingeschaltet. Diese eingeschalteten Transistoren überbrücken die entsprechenden Dioden D1, D4, D6 und D7 und es ergibt sich eine Ersatzschaltung wie in Fig. 5b. Es wirken nur die Dioden D2, D3, D5 und D8 als gleichrichtende Elemente und es ergibt sich ein Spannungsverlauf der negativen Halbwelle der Ausgangsspannung U_{A} entsprechend.

Da das Umschalten des gesteuerten Brückengleichrichters mit niedriger Frequenz erfolgt, werden keine besonders hohen Anforderungen an die Schaltgeschwindigkeit der optische gekoppelten Schaltelemente gestellt.

Der Zeitpunkt des Umschaltens muss im Nulldurchgang der Wechselspannung erfolgen, ist aber der Ansteuerschaltung AST bekannt und kann als (ganzzahliges) Teilverhältnis von der PWM-Frequenz abgeleitet bzw. starr mit dieser verknüpft werden.

Wenngleich die Erfindung im Zusammenhang mit der Erzeugung einer Einphasen-Wechselspannung beschrieben wurde, sollte dem Fachmann klar sein, dass durch geeignete Modifikation beispielsweise auch eine 3-Phasen-Wechselspannung erzeugt werden kann.

Die Ausgangswechselspannung wird üblicherweise eine Frequenz von 50Hz oder 60Hz aufweisen, doch soll der Begriff "Netzfrequenz" nicht auf diese Werte einschränkend gedacht sein. Es sind ebenso andere Ausgangsfrequenzen möglich, z.B. eine Netzfrequenz von 400 Hz, wie sie für Bordnetze üblich ist. Die Frequenz der Ausgangsspannung kann auf stufenlos oder stufenweise umgeschaltet werden, falls dies erforderlich ist.

Die Schallfrequenz der Pulsweitenmodulation liegt zweckmäßigerweise über 20 kHz, vorzugsweise im Bereich vom 100 kHz, zumal bei so hohen Frequenzen die Mittel für die Tiefpassfilterung sehr gering gehalten werden bzw. de facto vollständig entfallen können, da diese Filterung in der Last erfolgen kann, soferne sie z.B. inaktive und ohm'sche Anteile aufweist. Auch entsprechend träge Lasten, wie z.B. Glühlampen, benötigen keine besondere Tiefpassfilterung.

Ein großer Vorteil der Erfindung liegt auch darin, dass durch die abwechselnd positiv und negativ an der Primärseite des Übertragens gelegten Impulse ein Betrieb in der Sättigung und damit thermische Verlust vermieden werden können.

## Patentansprüche

1. Verfahren zum Erzeugen einer Wechselspannung im Netzfrequenzbereich aus einer Eingangsgleichspannung, bei welchem die Eingangsgleichspannung mit gegenüber der Netzfrequenz hoher Schaltfrequenz pulsweitenmoduliert an die Primärwicklung eines Übertragers geschaltet wird,
**dadurch gekennzeichnet,**
**dass** an die Primärwicklung zwei gegenpolige, pulsweitenmodulierte Rechteckpulse (a, b) gelegt werden, wobei jeder Puls entsprechend einer Halbwelle der zu erzeugenden Wechselspannung moduliert ist, und die Impulse beider Pulse jeweils so gegeneinander verschoben, dass die Impulse eines Pulses in die Lücken des anderen Pulses fallen, an der Sekundärseite des Übertragers die Impulse beider Pulse gleichgerichtet werden, so dass nur noch ein Puls (d) aus Impulsen einer Polarität vorliegt, welche aufgrund ihrer Pulsweitenmodulation aufeinander folgenden Halbwellen der zu erzeugenden Wechselspannung entsprechen, und der nach Gleichrichtung erhaltene Puls periodisch mit der doppelten Frequenz der zu erzeugenden Wechselspannung umgepolt wird, so dass ein Puls (e) erhalten wird, der bezüglich Amplitude, Frequenz und Polarität der Ausgangswechselspannung pulsweitenmoduliert ist.

2. Verfahren nach Anspruch 1,
**dadurch gekennzeichnet, dass** der erhaltene Puls (e) einer Tiefpassfilterung unterzogen wird, um die Ausgangswechselspannung (f) zu erhalten.

3. Verfahren nach Anspruch 1 oder 2,
**dadurch gekennzeichnet, dass** bei in zwei Hälften geteilter Primärwicklung des Übertragers die Eingangsgleichspannung entsprechend den gegenpoligen, pulsweitenmodulierten Rechteckpulsen jeweils an die eine bzw. gegenpolig an die andere Wicklungshälfte geschaltet wird.

4. Spannungswandler zum Umwandeln einer Eingangsgleichspannung (U_{E}) in eine Ausgangswechselspannung (U_{A}) im Netzfrequenzbereich, mit einem Übertrager (UET), an dessen Primärwicklung (W1) die Eingangsgleichspannung über eine von einer Ansteuerschaltung (AST) angesteuerte Schalteinrichtung (S1,S2) mit gegenüber der Netzfrequenz (f_{N}) hoher Schaltfrequenz (fₛ) pulsweiten-moduliert geschaltet wird,
**dadurch gekennzeichnet,**
**dass** die Schalteinrichtung (S1,S2) und die Ansteuerschaltung (AST) dazu eingerichtet sind, aus der Eingangsgleichspannung (V_{E}) an die Primärwicklung (W1) zwei gegenpolige, pulsweitenmodulierte Rechteckpulse (a, b) zu legen, wobei jeder Puls entsprechend einer Halbwelle der zu erzeugenden Wechselspannung moduliert ist, und die beiden Pulse gegeneinander verschoben sind, so dass die Impulse eines Pulses in die Lücken des anderen Pulses fallen, der Sekundärwicklung (W2) des Übertragers (UET) ein Gleichrichter (GLR) nachgeschaltet ist, an dessen Ausgang nur noch ein Puls (d) aus Impulsen einer Polarität vorliegt, welche aufgrund ihrer Pulsweitenmodulation aufeinander folgenden Halbwellen (a) der zu erzeugenden Wechselspannung entsprechen, und dem Gleichrichter (GLR) ein gesteuerter Umpolschalter (UPS) nachgeordnet ist, um den nach dem Gleichrichter vorliegenden Puls mit der doppelten Frequenz der zu erzeugenden Wechselspannung (U_{A}) umzupolen, so dass ein Puls (e) erhalten wird, der bezüglich Amplitude, Frequenz und Polarität der Ausgangswechselspannung pulsbreitenmoduliert ist.

5. Spannungswandler nach Anspruch 4,
**dadurch gekennzeichnet, dass** durch ein internes und/oder verbraucherseitiges Tiefpassfilter (TPF) aus diesem Puls (e) die Ausgangswechselspannung (f) erhalten wird.

6. Spannungswandler nach Anspruch 5,
**dadurch gekennzeichnet, dass** die Primärwicklung (W1) des Übertragers (UET) in zwei Hälften (W11, W12) geteilt ist und die Schalteinrichtung zwei gesteuerte Schalter (S1, S2) aufweist, mit deren Hilfe die Eingangsgleichspannung (U_{E}) abwechselnd an die eine bzw. gegenpolig an die andere Wicklungshälfte legbar ist.

7. Spannungswandler nach Anspruch 4 oder 6,
**dadurch gekennzeichnet, dass** das Tiefpassfilter aus einer Induktivität (L) in einem Längszweig nach dem Umpolschalter (UPS) und der Last (LAS) gebildet ist.

8. Spannungswandler nach einem der Ansprüche 4 bis 7,
**dadurch gekennzeichnet, dass** das Tiefpassfiler zumindest zum Teil in einer induktiven Last enthalten ist.

9. Spannungswandler nach einem der Ansprüche 4 bis 8,
**dadurch gekennzeichnet, dass** der Umpolschalter (UPS) aus einer Brückenschaltung besteht, welche in ihren vier Zweigen je einen gesteuerten Schalter (S31, S32, S33, S34) aufweist.

10. Spannungswandler nach einem der Ansprüche 4 bis 9,
**dadurch gekennzeichnet, dass** Gleichrichter und Umpolschalter in einem Gleichrichtschalter (IGS) mit Brückenstruktur zusammengefasst sind, wobei jeder Brückenzweig zwei gegenpolig, in Serie geschaltete Dioden (D1, D2; D3, D4; D5, D6; D7, D8) aufweist und jede Diode von einem Schalttransistor (T1 .... T8) überbrückt ist, sodass durch abwechselnde Ansteuerung je eines Schalttransistors (T2, T3, T5, T8 bzw. T1, T4, T6, T7) je Brückenzweig mit doppelter Netzfrequenz abwechselnd die einen (D1, D4, D6, D7) bzw. die anderen (D2, D3, D5, D8) Dioden der Brücke deren wirksamen Zweig bilden, wodurch der bezüglich Amplitude, Frequenz und Polarität der Ausgangswechselspannung (U_{A}) pulsbreiten-modulierte Puls (e) erhalten wird.

11. Spannungswandler nach Anspruch 10,
**dadurch gekennzeichnet, dass** jeder Schalttransistor (T1 ... T8) über eine Leuchtdiode (LD1 ... LD8) potentialgetrennt ansteuerbar ist.

12. Spannungswandler nach Anspruch 10 oder 11,
**dadurch gekennzeichnet, dass** der Gleichrichterschalter (IGS) als integrierte Schaltung ausgebildet ist.

13. Spannungswandler nach einem der Ansprüche 4 bis 12,
**dadurch gekennzeichnet, dass** für die primärseitige Schalteinrichtung (S1,S2) und für den gesteuerten Umpolschalter (UPS) eine gemeinsame Ansteuerschaltung (AST) vorgesehen ist, wobei die Schaltfrequenz (fₛ) der Pulsweitenmodulation ein Vielfaches der Netzfrequenz (f_{N}) beträgt und zu dieser in starrer Phasenlage liegt.
